(19) **Europäisches Patentamt European Patent Office Office européen des brevets**

(11) **EP 4 068 171 B1**

(12) **EUROPEAN PATENT SPECIFICATION**

(45) Date of publication and mention
of the grant of the patent:
**07.05.2025 Bulletin 2025/19**

(51) International Patent Classification (IPC):
***G06Q 10/00*** *(2023.01)*

(52) Cooperative Patent Classification (CPC):
**G06Q 10/00**

(21) Application number: **21208500.5**

(22) Date of filing: **16.11.2021**

(54) **METHOD AND SYSTEM FOR PREDICTING PERSONALIZED BOARDING TIME**

VERFAHREN UND SYSTEM ZUR VORHERSAGE DER PERSONALISIERTEN EINSTIEGSZEIT

PROCÉDÉ ET SYSTÈME DE PRÉVISION D'UNE HEURE D'EMBARQUEMENT PERSONNALISÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2021 IN 202121014489**

(43) Date of publication of application:
**05.10.2022 Bulletin 2022/40**

(73) Proprietor: **Tata Consultancy Services Limited
Maharashtra (IN)**

(72) Inventors:
• **DAS, ABHIJIT KUMAR
700160 Kolkata, West Bengal (IN)**
• **ESAKKIAPPAN, CHINNAKANNAN
603103 Chennai, Tamil Nadu (IN)**
• **RAJAIAN, DAVID SUDHARSAN
603103 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2009 055 271     US-A1- 2019 108 758
US-A1- 2019 265 703**

**Description**

CROSS-REFERENCE TO RELATED APPLICATIONS
AND PRIORITY

The present application claims priority from Indian patent application No. 202121014489, filed on March 30, 2021.

TECHNICAL FIELD

The disclosure herein generally relates to the field of predicting personalized boarding time, and more specifically, to a method and system for predicting a personalized boarding time and generating alerts to each individual.

BACKGROUND

In the present era using an Estimated Departure Time (EDT) and historical boarding time average to provide boarding time for all passengers to board, or passengers assemble at a designated gate for snapping their boarding pass before leaving for boarding. The management of passengers at the designated gate is maintained by crew members of the airline and therefore not possible to maintain social distancing.

During pandemic, social distancing is always going to be a norm in our day to day life. From airline perspective, airports are highly congested area and very difficult to maintain social distancing and it requires lot of staff to handle this. This personalized boarding time helps the airlines to maintain minimal queue size during boarding thereby maintaining social distancing with minimal staff.

Existing solutions respect to real-time boarding time prediction using LSTM (Long Short-Term Memory) network to learn this dynamical behavior over time with regards to the given boarding progress indicators, but these systems do not provide distinct boarding time for individual passengers and do not maintain the fixed size of the queue at the gate during boarding time.

Document US2019/108758 A1 discloses a system and a method to predict flight delay.

SUMMARY

Embodiments of the disclosure present technological improvements as solutions to one or more of the above-mentioned technical problems recognized by the inventors in conventional systems. For example, in one embodiment, a method and system for predicting a personalized boarding time and generating alerts to each individual is provided.

In one aspect, a processor-implemented method for predicting a personalized boarding time and generating alerts to each individual is provided. The method includes one or more steps such as receiving a flight schedule data, one or more predefined flight configuration data, one or more passenger details, one or more historical boarding time data, one or more real time invasive data, one or more real time non-invasive data and one or more airline policies and reference data. A boarding service rate is estimated based on the received one or more historical boarding time data. Further, the method includes ranking each of the one or more passengers based on the received one or more passenger details including an allocated seat, age of the one or more passengers, received one or more historical boarding data of similar flight and the received predefined configuration of an aircraft. A real time personalized boarding time is estimated based on the ranking of each of the one or more passengers and the estimated boarding service rate using a predefined linear regression model. Furthermore, the method includes generating one or more alerts based on the estimated real-time personalized boarding time, wherein the one or more alerts are generated at a predefined time interval for joining a queue of a predefined length.

In another aspect, a system for predicting a personalized boarding time and generating alerts to each individual is provided. The system includes an input/output interface configured to receive a flight schedule data, one or more predefined flight configuration data, one or more passenger details, one or more historical boarding time data, one or more real time invasive data, one or more real time non-invasive data and one or more airline policies and reference data, one or more hardware processors and at least one memory (110) storing a plurality of instructions, wherein the one or more hardware processors are configured to execute the plurality of instructions stored in at least one memory (110).

Furthermore, the system is configured to estimate a boarding service rate based on the one or more historical boarding time data, and rank each of the one or more passengers based on the received one or more passenger details including an allocated seat, age of the one or more passengers, received one or more historical boarding data of similar flight and the received predefined configuration of an aircraft. Further, the system is configured to estimate a real-time personalized boarding time based on the ranking of each of the one or more passengers and the estimated boarding service rate using a predefined linear regression model. Furthermore, the system is configured to generate one or more alerts based on the estimated real-time personalized boarding time. The one or more alerts are generated at a predefined time interval for joining a queue of a predefined length.

In yet another aspect, there are provided one or more non-transitory machine-readable information storage mediums comprising one or more instructions, which when executed by one or more hardware processors causes a method for predicting a personalized boarding time and generating alerts to each individual is provided. The method includes one or more steps such as receiving a flight schedule data, one or more predefined flight configuration data, one or more passenger details, one or more historical boarding time data, one or more real time invasive data, one or more real time non-invasive data and one or more airline policies and reference data. A boarding service rate is estimated based on the received one or more historical boarding time data. Further, the method includes ranking each of the one or more passengers based on the received one or more passenger details including an allocated seat, age of the one or more passengers, received one or more historical boarding data of similar flight and the received predefined configuration of an aircraft. A real time personalized boarding time is estimated based on the ranking of each of the one or more passengers and the estimated boarding service rate using a predefined linear regression model. Furthermore, the method includes generating one or more alerts based on the estimated real-time personalized boarding time, wherein the one or more alerts are generated at a predefined time interval for joining a queue of a predefined length.

It is to be understood that the foregoing general descriptions and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system to predict personalized boarding time and remaining time for boarding to each individual, according to an embodiment of the present disclosure.
FIG. 2 is a functional block diagram to illustrate personalized boarding time, according to an embodiment of the present disclosure.
FIG. 3 is a schematic diagram to illustrate remaining time for boarding to each individual, according to an embodiment of the present disclosure.
FIG. 4 is a flow diagram to illustrate a method to predict personalized boarding time and remaining time for boarding to each individual, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes, which may be substantially represented in computer readable medium and so executed by a computer or processor, whether or not such computer or processor is explicitly shown.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The embodiments herein provide a method and system predicting a personalized boarding time and generating alerts to each individual. It would be appreciated that the personalized boarding time is referred for the time to report for boarding at a departure gate to join the queue. Existing technology uses the ETD and historical boarding time average to provide the boarding time for all passengers to board, and passengers assemble at the designated gate for snapping their boarding pass before leaving for aircraft. The management of boarding of passengers at the gates of the airport is maintained by gate crew members of the airline and not possible to maintain social distancing. Herein, a logistic regression-based model is used to predict the boarding time based on related parameters for the flight including profile specific boarding time, similar flight in the past, same source and destination etc. Herein, the system is configured to determine personalized boarding time for each of the one or more passengers. The system is trained to use historical and real time service data based on a service rate provided by the airline crew members. The system is configured to control the arrival time of the passengers by triggering necessary alerts for necessary delay or faster arrival, hence the arrival rate is controlled by a machine-driven solution and ensures effective and stable management of queue at the gate.

The system is configured to ensure seamless management of queue at gate for boarding passengers with social distancing without manual intervention. In addition to, the system is configured to determine time remaining to join the queue by each of the one or more passengers based on the estimated personalized boarding time, the received boarding arrangements and a predefined departure time from flight schedule data. Herein, the queue includes an active queue and a standby queue. Furthermore, the system is configured to generate updates based on an actual remaining time, and an optimized remaining time to cater for the varying speeds (number of passengers boarded per minute) in boarding at various stages. It would be appreciated that the actual remaining time is a difference between a current time and the predicted boarding time for the passenger. The optimized remaining time is calculated by bringing in a stabilization buffer to the actual time remaining, which will be somewhere between 30 and 60 seconds depending on the boarding service rate and historical data. The buffer can be either added or removed from the actual remaining time depending on the number of passengers boarded per minute.

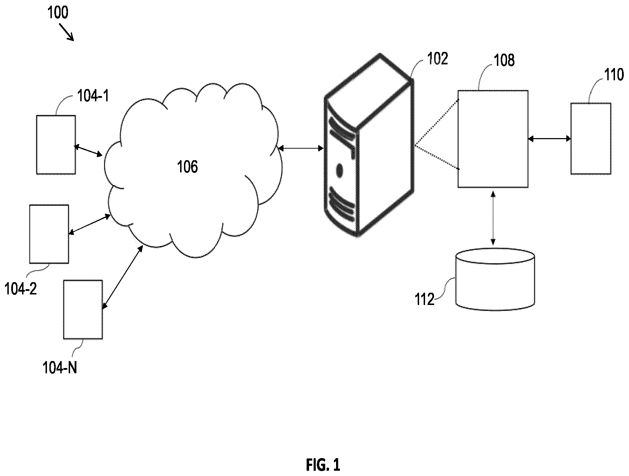

Referring now to the drawings, and more particularly to FIG. 1 through 4, where similar reference characters denote corresponding features consistently throughout the figures, there are shown preferred embodiments and these embodiments are described in the context of the following exemplary system and/or method.

FIG. 1 illustrates a block diagram of a system (100) for predicting a personalized boarding time and generating alerts to each individual, in accordance with an example embodiment. Although the present disclosure is explained considering that the system (100) is implemented on a server, it may be understood that the system (100) may comprise one or more computing devices (102), such as a laptop computer, a desktop computer, a notebook, a workstation, a cloud-based computing environment and the like. It will be understood that the system (100) may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation, and the like. The I/O interface (104) are communicatively coupled to the system (100) through a network (105).

In an embodiment, the network (105) may be a wireless or a wired network, or a combination thereof. In an example, the network (105) can be implemented as a computer network, as one of the different types of networks, such as virtual private network (VPN), intranet, local area network (LAN), wide area network (WAN), the internet, and such. The network (105) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (105) may include a variety of network devices, including routers, bridges, servers, computing devices, storage devices. The network devices within the network (105) may interact with the system (100) through communication links.

The system (100) supports various connectivity options such as BLUETOOTH®, USB, ZigBee and other cellular services. The network environment enables connection of various components of the system (100) using any communication link including Internet, WAN, MAN, and so on. In an exemplary embodiment, the system (100) is implemented to operate as a stand-alone device. In another embodiment, the system (100) may be implemented to work as a loosely coupled device to a smart computing environment. The components and functionalities of the system (100) are described further in detail.

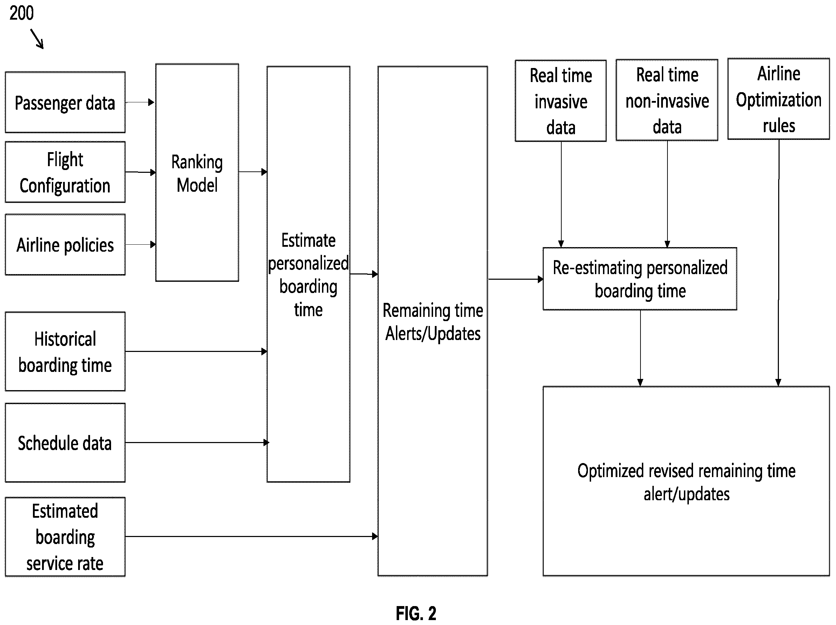

Referring FIG. 2, illustrating a functional block diagram (200) of the system (100) for predicting a personalized boarding time and generating alerts to each passenger. Herein, the system (100) comprises at least one memory (110) with a plurality of instructions, one or more databases (112), one or more input/output (I/O) interfaces (104) and one or more hardware processors (108) which are communicatively coupled with the at least one memory (110) to execute a plurality of modules (114) therein. The one or more I/O interfaces (104) are configured to receive a flight schedule data, one or more predefined flight configuration data, one or more passenger details, one or more historical boarding time data, one or more real time invasive data, one or more real time non-invasive data and one or more airline policies and reference data. The one or more I/O interfaces (104) are configured to convey personalized boarding time to the one or more passengers.

It is to be noted that the input to the system (100) comprising one or more passenger details, a historical boarding data for each of the one or more passengers, predefined airline policies and boarding arrangements. Further, the input includes flight schedule data, flight configuration data, real-time invasive data, real-time non-invasive data, estimated run-rate data, and environmental & reference data. Herein, the predefined airline policies include a boarding arrangement, an arrangement for one or more dropped passengers and preferences to board one or more passengers based on a loyalty tier, and a fare class. The flight schedule data includes Estimated Time of Arrival (ETA) and Estimated Time of Departure (ETD) along with origin and destination information of the flight.

The real-time invasive data includes a light detection and ranging (LIDAR) sensor data. It would be appreciated that sometimes LIDAR is called laser scanning or 3D scanning. The technology uses eye-safe laser beams to create a 3D representation of the surveyed environment. The LIDAR sensor emits pulsed light waves into the surrounding environment. These pulses bounce off surrounding objects and return to the LIDAR sensor. The LIDAR sensor uses the time it took for each pulse to return to the sensor to calculate the distance it traveled. Repeating this process millions of times per second creates a precise, real-time 3D map of the airport gate which can be leveraged as input to calculate the personalized boarding time.

The real-time non-invasive data includes boarding pass scan, an order of boarding, number of passengers standing in the active queue and delay in the scan area due to some congestion. Herein, the non-invasive data refers to data collected from activities which are not sensitive. Boarding pass scan is a normal non-sensitive activity which shares key data of who is currently boarding the aircraft. The order of boarding pass scanned provides important details about the actual order of boarding and can compare it with the planned order of boarding. These data can be used to calculate or recalculate personalized boarding time.

In one embodiment, the system (100) is configured to estimate boarding service rate based on the received one or more historical boarding time data. It would be appreciated that the boarding service rate may vary depending upon age and health condition of the one or more passengers. To estimate the boarding service rate S for at least one passenger:

$$S = P/T$$

wherein, $P$ = Total passengers for the previous similar flight.
$T$ = Time taken for all passengers to board the flight.

Further, the system (100) is configured to rank each of the one or more passengers based on the received one or more passenger details including an allocated seat, age of the one or more passengers, received one or more historical boarding data of similar flight and the received predefined configuration of an aircraft.

Furthermore, the system (100) is configured to estimate personalized boarding time based on the ranking of each of the one or more passengers using a linear regression model. It is to be noted that the linear regression model is used to minimize a loss function which is used to measure goodness of fit. An initial static boarding time is predicted from the initiate rank to each of the one or more passengers. The personalized boarding time is estimated by considering dynamic operational hurdles and the received input datasets using a linear regression model.

A linear regression model establishes a linear relationship between dependent output with independent variables. Boarding time forecast (Y) is a dependent variable and ranking score ($X_1$) is a dependent variable in our proposition.

$$Y = B_0 + B_1 {}^*X_1$$

wherein, $B_0$, and $B_1$ are the coefficients of the regression model estimated from the historical data. These coefficients are estimated using an Ordinary Least Square(OLS) method. In this OLS method, the estimates are $B_0$, and $B_1$ is such that prediction value of $Y$ from the model will deviate from the actual $Y$ with minimum deviation.

It would be appreciated that the system (100) analyses the cause of delay in boarding by comparing with the average historical time which may include boarding related delays, and service rate related delays. The boarding related delays include no shows (temporary and permanent), standing in incorrect order in the queue, and dropouts. The service-related delays include issues at in-gate, non-availability of staff, and congestion at the in-gate of the airport.

In another embodiment, the system (100) is configured to determine time remaining for boarding of each of the one or more passengers based on the estimated personalized boarding time and a predefined departure time. The remaining time is calculated based on a revised boarding time and a current time with stabilization buffer. The stabilization buffer is a value added to the remaining time to match with changing boarding speed (both slow and fast).

In one example, wherein a passenger initial boarding time is 9:00 AM and the current time is 8:00 AM, then the remaining time for boarding is calculated via the difference between the above 2 inputs which will be 60 minutes. When the time difference is more or very less the stabilization buffer will be close to zero. If the time difference is few minutes like if the current time is 8:45 AM, then the stabilization buffer will be somewhere between 30 and 60 seconds depending on the service rate and historical data.

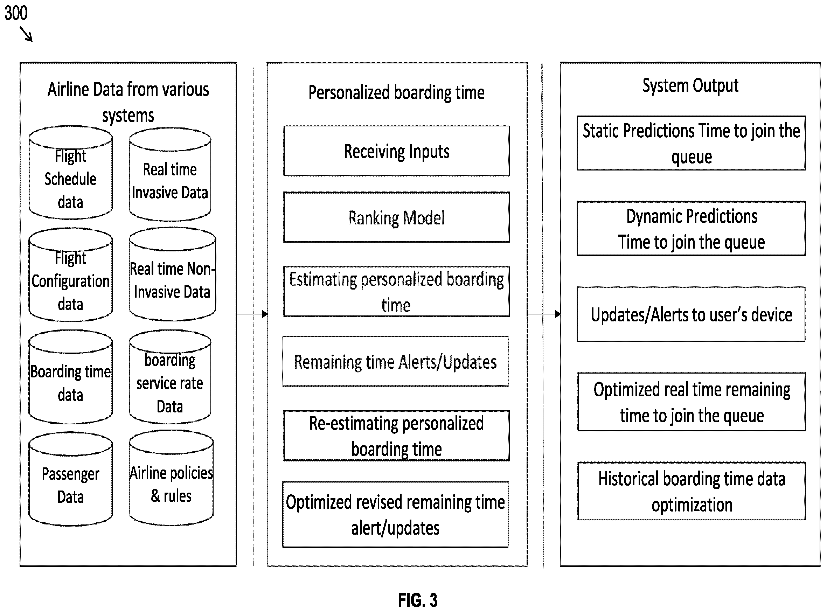

Referring FIG. 3, illustrating a block diagram (300), wherein the system (100) is configured to generate one or more alerts for boarding and maintaining an active and standby queue based on the determined time remaining for boarding of each of the one or more passengers. Herein, the active queue is a physical queue of a predefined length and the standby queue is a virtual queue. It is to be noted that the generated one or more alerts are shared with one or more passengers in real time whenever there is a change in the predicted boarding time. Once a passenger gets service from the active queue, an updated time remaining for boarding for remaining one or more passengers is shared. The moment one passenger is served from the active queue, the immediate first passenger from the standby queue joins the active queue for boarding and one from the remaining passenger list, who was getting initiation of least remaining time for boarding, receives alert to join the standby queue. If any passenger fails to join the standby queue or leaves from the standby or active queue, the system triggers immediate next eligible passenger to join the standby queue.

**Standby Queue:** It is a virtual queue with a predefined size such as less than 30% (Configurable parameter based on airline requirements) of the active queue, to get passengers ready to join the active queue. The system decides the passengers to be on the standby queue based on their ranking.

**Active Queue:** It is a physical queue where passengers will be waiting for boarding the aircraft. The active queue size may be very small like 5% (configurable parameter based on airline requirements) of the aircraft capacity and the in-gate capacity. The system decides the passengers to be on the active queue based on their ranking.

In the preferred embodiment, the system (100) is configured to re-estimate personalized boarding time to generate one or more alerts for one or more drop-out and absent passengers. Based on ranking of one or more passengers, the re-estimated personalized time and service order the system decides for a drop-out or a no-show passenger. It would be appreciated that a real time dynamic impact i.e. a critical path analysis ensures minimal impact on overall boarding time. The re-estimation of the personalized time is based on real time service run rate and dropped out/no show rate, and number of remaining passengers.

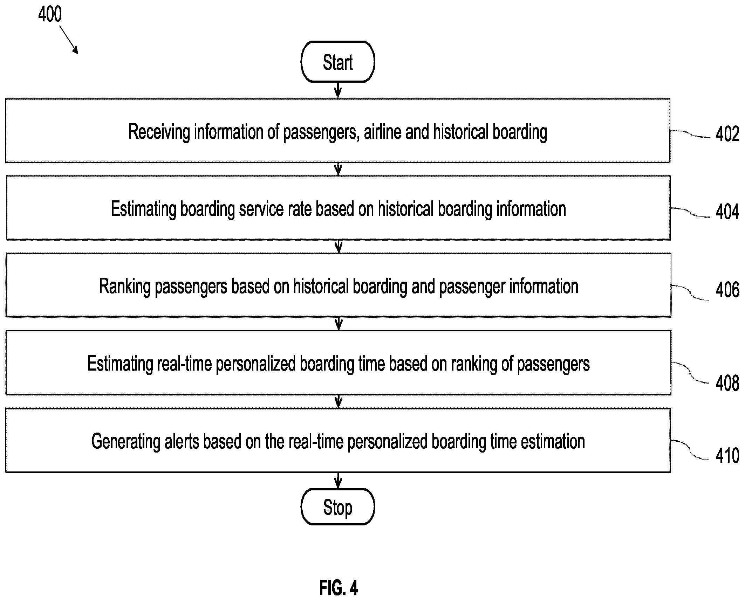

Referring FIG. 4, to illustrate a processor-implemented method (400) for predicting a personalized boarding time and generating alerts to each individual.

Initially, at the step (402), receiving, via an input/output interface, a flight schedule data, one or more predefined flight configuration data, one or more passenger details, one or more historical boarding time data, one or more real time invasive data, one or more real time non-invasive data and one or more airline policies and reference data.

At the next step (404), estimating a boarding service rate based on the received one or more historical boarding time data.

At the next step (406), ranking each of the one or more passengers based on the received one or more passenger details including an allocated seat, age of the one or more passengers, received one or more historical boarding data of similar flight and the received predefined configuration of an aircraft.

At the next step (408), estimating a real-time personalized boarding time based on the ranking of each of the one or more passengers and the estimated boarding service rate using a predefined linear regression model.

At the next step (410), generating one or more alerts based on the estimated real-time personalized boarding time, wherein the one or more alerts are generated at a predefined time interval for joining a queue of a predefined length.

In another embodiment, the processor-implemented method (400) includes re-estimating personalized boarding time for one or more drop-out passengers and one or more absent passengers to join the queue.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of distinct boarding time for individual passengers and do not maintain the fixed size of the queue at the gate during boarding time Therefore, embodiments herein provide a system and method to predict the personalized boarding time dynamically. The predicted personalized boarding time in real time by considering boarding data, current passenger details, flight configuration details, ranking rules, service rate and other related reference data. Herein, the method categorizes input data related to an airline history, airport history, and various airline reference data. Further, the system analyzes the cause of delay in boarding by comparing with the average historical time which may include ranking related delays, service rate related details and more. The system and method compute the personalized boarding time by considering dynamic operational hurdles and various input datasets discussed above.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory (110) with software modules located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor-implemented method (400) comprising:

receiving (402), via an input/output interface, a flight schedule data, one or more predefined flight configuration data, one or more passenger details, one or more historical boarding time data, one or more real time invasive data, one or more real time non-invasive data and one or more airline policies and reference data, wherein the real-time invasive data includes a light detection and ranging (LIDAR) sensor data, and wherein the real-time non-invasive data includes boarding pass scan, and an order of boarding;
estimating (404), via one or more hardware processors (112), a boarding service rate for at least one passenger based on the received one or more historical boarding time data of total passengers for previous similar flight and time taken for all passengers to board the flight;
ranking (406), via one or more hardware processors, each of the one or more passengers based on the received one or more passenger details including an allocated seat, age of the one or more passengers, received one or more historical boarding data of similar flight and the received predefined configuration of an aircraft;
estimating (408), via the one or more hardware processors, a real-time personalized boarding time based on the ranking of each of the one or more passengers and the estimated boarding service rate using a predefined linear regression model, wherein the regression model uses coefficients estimated from the historical boarding data using an Ordinary Least Square (OLS) method, wherein a real-time 3D map of airport gate generated by the LIDAR sensor data is used as an input to calculate the personalized boarding time, and wherein the order of boarding obtained from the real-time non-invasive data is compared with a planned order of boarding to estimate the real-time personalized boarding time; and
generating (410), via the one or more hardware processors, one or more alerts based on the estimated real-time personalized boarding time, wherein the one or more alerts are generated at a predefined time interval for joining a queue of a predefined length, and wherein the one or more alerts are conveyed to the one or more passengers via the input/output interface.

2. The processor-implemented method (400) of claim 1, further comprising:
re-estimating, via the one or more hardware processors, personalized boarding time for one or more drop-out passengers and one or more absent passengers to join the queue.

3. The processor-implemented method (400) of claim 1, wherein the queue comprising an active queue and a standby queue.

4. The processor-implemented method (400) of claim 1, wherein the active queue is a physical queue of a predefined length and the standby queue is a virtual queue.

5. The processor-implemented method (400) of claim 1, wherein the predefined airline policies include a boarding arrangement, an arrangement for one or more dropped passengers and preferences to board one or more passengers based on a loyalty tier, and a fare class.

6. The processors-implemented method (400) of claim 1, wherein flight schedule data includes Estimated Time of Arrival (ETA) and Estimated Time of Departure (ETD) along with origin and destination information of the flight.

7. A system (100) comprising:

an input/output interface (104) to receive a flight schedule data, one or more predefined flight configuration data, one or more passenger details, one or more historical boarding time data, one or more real time invasive data, one or more real time non-invasive data and one or more airline policies and reference data, wherein the real-time invasive data includes a light detection and ranging (LIDAR) sensor data, and wherein the real-time non-invasive data includes boarding pass scan, and an order of boarding;

one or more hardware processors (112);

at least one memory (110) in communication with the one or more hardware processors, wherein the one or more hardware processors are configured to execute programmed instructions stored in the at least one memory (110), to:

estimate a boarding service rate for at least one passenger based on the one or more historical boarding time data of total passengers for previous similar flight and time taken for all passengers to board the flight;

rank each of the one or more passengers based on the received one or more passenger details including an allocated seat, age of the one or more passengers, received one or more historical boarding data of similar flight and the received predefined configuration of an aircraft;

estimate a real-time personalized boarding time based on the ranking of each of the one or more passengers and the estimated boarding service rate using a predefined linear regression model, wherein the regression model uses coefficients estimated from the historical boarding data using an Ordinary Least Square (OLS) method, wherein a real-time 3D map of airport gate generated by the LIDAR sensor data is used as an input to calculate the personalized boarding time, and wherein the order of boarding obtained from the real-time non-invasive data is compared with a planned order of boarding to estimate the real-time personalized boarding time; and

generate one or more alerts based on the estimated real-time personalized boarding time, wherein the one or more alerts are generated at a predefined time interval for joining a queue of a predefined length, and wherein the one or more alerts are conveyed to the one or more passengers via the input/output interface.

8. A non-transitory computer readable medium storing one or more instructions which when executed by one or more processors on a system cause the one or more processors to perform the method comprising:

receiving, via an input/output interface, a flight schedule data, one or more predefined flight configuration data, one or more passenger details, one or more historical boarding time data, one or more real time invasive data, one or more real time non-invasive data and one or more airline policies and reference data, wherein the real-time invasive data includes a light detection and ranging (LIDAR) sensor data, and wherein the real-time non-invasive data includes boarding pass scan, and an order of boarding;

estimating, via one or more hardware processors, a boarding service rate for at least one passenger based on the received one or more historical boarding time data of total passengers for previous similar flight and time taken for all passengers to board the flight;

ranking, via one or more hardware processors, each of the one or more passengers based on the received one or more passenger details including an allocated seat, age of the one or more passengers, received one or more historical boarding data of similar flight and the received predefined configuration of an aircraft;

estimating, via the one or more hardware processors, a real-time personalized boarding time based on the ranking of each of the one or more passengers and the estimated boarding service rate using a predefined linear regression model, wherein the regression model uses coefficients estimated from the historical boarding data using an Ordinary Least Square (OLS) method, wherein a real-time 3D map of airport gate generated by the LIDAR sensor data is used as an input to calculate the personalized boarding time, and wherein the order of boarding obtained from the real-time non-invasive data is compared with a planned order of boarding to estimate the real-time personalized boarding time; and

generating, via the one or more hardware processors, one or more alerts based on the estimated real-time personalized boarding time, wherein the one or more alerts are generated at a predefined time interval for joining a queue of a predefined length, and wherein the one or more alerts are conveyed to the one or more passengers via the input/output interface.

**Patentansprüche**

1. Prozessorimplementiertes Verfahren (400), umfassend:

Empfangen (402), über eine Eingabe-/Ausgabeschnittstelle, von Flugplandaten, einem oder mehreren vordefinierten Flugkonfigurationsdaten, einem oder mehreren Passagierdetails, einem oder mehreren historischen Einstiegszeitdaten, einem oder mehreren Echtzeit-Invasivdaten, einem oder mehreren nicht-invasiven Echtzeitdaten und einer oder mehreren Fluglinienrichtlinien und Referenzdaten, wobei die Echtzeit-Invasivdaten Light Detection and Ranging (LIDAR)-Sensordaten beinhalten, und wobei die nicht-invasiven Echtzeitdaten einen Einstiegspassscan und eine Einstiegsreihenfolge beinhalten;

Schätzen (404), über einen oder mehrere Hardwareprozessoren (112), einer Einstiegsdienstrate für mindestens einen Passagier basierend auf den empfangenen einen oder mehreren historischen Einstiegszeitdaten von Gesamtpassagieren für einen vorherigen ähnlichen Flug und Zeit, die für alle Passagiere zum Einsteigen in den Flug benötigt wird;

Einstufen (406), über einen oder mehrere Hardwareprozessoren, jedes des einen oder der mehreren Passagiere basierend auf den empfangenen einen oder mehreren Passagierdetails, einschließlich eines zugewiesenen Sitzplatzes, des Alters des einen oder der mehreren Passagiere, der empfangenen einen oder mehreren historischen Einstiegsdaten eines ähnlichen Flugs und der empfangenen vordefinierten Konfiguration eines Flugzeugs;

Schätzen (408), über den einen oder die mehreren Hardwareprozessoren, einer personalisierten Echtzeit-Einstiegszeit basierend auf der Einstufung jedes des einen oder der mehreren Passagiere und der geschätzten Einstiegsdienstrate unter Verwendung eines vordefinierten linearen Regressionsmodells, wobei das Regressionsmodell Koeffizienten verwendet, die aus den historischen Einstiegsdaten unter Verwendung eines Ordinary Least Square (OLS)-Verfahrens geschätzt werden, wobei eine Echtzeit-3D-Karte eines Flughafen-Gates, die durch die LIDAR-Sensordaten erzeugt wird, als eine Eingabe verwendet wird, um die personalisierte Einstiegszeit zu berechnen, und wobei die Einstiegsreihenfolge, die aus den nicht-invasiven Echtzeitdaten erhalten wird, mit einer geplanten Einstiegsreihenfolge verglichen wird, um die personalisierte Echtzeit-Einstiegszeit zu schätzen; und

Erzeugen (410), über den einen oder die mehreren Hardwareprozessoren, eines oder mehrerer Alarme basierend auf der geschätzten personalisierten Echtzeit-Einstiegszeit, wobei der eine oder die mehreren Alarme in einem vordefinierten Zeitintervall zum Anschließen an eine Warteschlange einer vordefinierten Länge erzeugt werden, und wobei der eine oder die mehreren Alarme über die Eingabe-/Ausgabeschnittstelle an den einen oder die mehreren Passagiere übermittelt werden.

2. Prozessorimplementiertes Verfahren (400) nach Anspruch 1, ferner umfassend:
Neuschätzen, über den einen oder die mehreren Hardwareprozessoren, der personalisierten Einstiegszeit für einen oder mehrere absteigende Passagiere und einen oder mehrere abwesende Passagiere zum Anschließen an die Warteschlange.

3. Prozessorimplementiertes Verfahren (400) nach Anspruch 1, wobei die Warteschlange eine aktive Warteschlange und eine Bereitschaftswarteschlange umfasst.

4. Prozessorimplementiertes Verfahren (400) nach Anspruch 1, wobei die aktive Warteschlange eine physische Warteschlange einer vordefinierten Länge ist und die Bereitschaftswarteschlange eine virtuelle Warteschlange ist.

5. Prozessorimplementiertes Verfahren (400) nach Anspruch 1, wobei die vordefinierten Fluglinienrichtlinien eine Einstiegsanordnung, eine Anordnung für einen oder mehrere absteigende Passagiere und Präferenzen zum Einsteigen eines oder mehrerer Passagiere basierend auf einer Loyalitätsstufe und eine Tarifklasse beinhalten.

6. Prozessorimplementiertes Verfahren (400) nach Anspruch 1, wobei Flugplandaten die geschätzte Ankunftszeit (ETA) und die geschätzte Abflugzeit (ETD) zusammen mit Ursprungs- und Zielinformationen des Fluges beinhalten.

7. System (100), umfassend:

eine Eingabe-/Ausgabeschnittstelle (104) zum Empfangen von Flugplandaten, einem oder mehreren vordefinierten Flugkonfigurationsdaten, einem oder mehreren Passagierdetails, einem oder mehreren historischen Einstiegszeitdaten, einem oder mehreren Echtzeit-Invasivdaten, einem oder mehreren nicht-invasiven Echtzeitdaten und einer oder mehreren Fluglinienrichtlinien und Referenzdaten, wobei die Echtzeit-Invasivdaten Light Detection and Ranging (LIDAR)-Sensordaten beinhalten, und wobei die nicht-invasiven Echtzeitdaten einen Einstiegspassscan und eine Einstiegsreihenfolge beinhalten;

einen oder mehrere Hardwareprozessoren (112);

mindestens einen Speicher (110) in Kommunikation mit dem einen oder den mehreren Hardwareprozessoren, wobei der eine oder die mehreren Hardwareprozessoren konfiguriert sind, um programmierte Anweisungen auszuführen, die in dem mindestens einen Speicher (110) gespeichert sind, um:

eine Einstiegsdienstrate für mindestens einen Passagier basierend auf den einen oder mehreren historischen Einstiegszeitdaten von Gesamtpassagieren für einen vorherigen ähnlichen Flug und Zeit, die für alle Passagiere zum Einsteigen in den Flug benötigt wird, zu schätzen;

jeden des einen oder der mehreren Passagiere basierend auf den empfangenen einen oder mehreren Passagierdetails, einschließlich eines zugewiesenen Sitzplatzes, des Alters des einen oder der mehreren Passagiere, der empfangenen einen oder mehreren historischen Einstiegsdaten eines ähnlichen Flugs und der empfangenen vordefinierten Konfiguration eines Flugzeugs, einzustufen;

eine personalisierte Echtzeit-Einstiegszeit basierend auf der Einstufung jedes des einen oder der mehreren Passagiere und der geschätzten Einstiegsdienstrate unter Verwendung eines vordefinierten linearen Regressionsmodells zu schätzen, wobei das Regressionsmodell Koeffizienten verwendet, die aus den historischen Einstiegsdaten unter Verwendung eines Ordinary Least Square (OLS)-Verfahrens geschätzt werden, wobei eine Echtzeit-3D-Karte eines Flughafen-Gates, die durch die LIDAR-Sensordaten erzeugt wird, als eine Eingabe verwendet wird, um die personalisierte Einstiegszeit zu berechnen, und wobei die Einstiegsreihenfolge, die aus den nicht-invasiven Echtzeitdaten erhalten wird, mit einer geplanten Einstiegsreihenfolge verglichen wird, um die personalisierte Echtzeit-Einstiegszeit zu schätzen; und

einen oder mehrere Alarme basierend auf der geschätzten personalisierten Echtzeit-Einstiegszeit zu erzeugen, wobei der eine oder die mehreren Alarme in einem vordefinierten Zeitintervall zum Anschließen an eine Warteschlange einer vordefinierten Länge erzeugt werden, und wobei der eine oder die mehreren Alarme über die Eingabe-/Ausgabeschnittstelle an den einen oder die mehreren Passagiere übermittelt werden.

8. Nichtflüchtiges computerlesbares Medium, das eine oder mehrere Anweisungen speichert, die, wenn sie von einem oder mehreren Prozessoren auf einem System ausgeführt werden, den einen oder die mehreren Prozessoren veranlassen, das Verfahren durchzuführen, umfassend:

Empfangen, über eine Eingabe-/Ausgabeschnittstelle, von Flugplandaten, einem oder mehreren vordefinierten Flugkonfigurationsdaten, einem oder mehreren Passagierdetails, einem oder mehreren historischen Einstiegszeitdaten, einem oder mehreren Echtzeit-Invasivdaten, einem oder mehreren nicht-invasiven Echtzeitdaten und einer oder mehreren Fluglinienrichtlinien und Referenzdaten, wobei die Echtzeit-Invasivdaten Light Detection and Ranging (LIDAR)-Sensordaten beinhalten, und wobei die nicht-invasiven Echtzeitdaten einen Einstiegspassscan und eine Einstiegsreihenfolge beinhalten;

Schätzen, über einen oder mehrere Hardwareprozessoren, einer Einstiegsdienstrate für mindestens einen Passagier basierend auf den empfangenen einen oder mehreren historischen Einstiegszeitdaten von Gesamtpassagieren für einen vorherigen ähnlichen Flug und Zeit, die für alle Passagiere zum Einsteigen in den Flug benötigt wird;

Einstufen, über einen oder mehrere Hardwareprozessoren, jedes des einen oder der mehreren Passagiere basierend auf den empfangenen einen oder mehreren Passagierdetails, einschließlich eines zugewiesenen Sitzplatzes, des Alters des einen oder der mehreren Passagiere, der empfangenen einen oder mehreren historischen Einstiegsdaten eines ähnlichen Flugs und der empfangenen vordefinierten Konfiguration eines Flugzeugs;

Schätzen, über den einen oder die mehreren Hardwareprozessoren, einer personalisierten Echtzeit-Einstiegszeit basierend auf der Einstufung jedes des einen oder der mehreren Passagiere und der geschätzten Einstiegsdienstrate unter Verwendung eines vordefinierten linearen Regressionsmodells, wobei das Regressionsmodell Koeffizienten verwendet, die aus den historischen Einstiegsdaten unter Verwendung eines Ordinary Least Square (OLS)-Verfahrens geschätzt werden, wobei eine Echtzeit-3D-Karte eines Flughafentors, die durch die LIDAR-Sensordaten erzeugt wird, als eine Eingabe verwendet wird, um die personalisierte Einstiegszeit zu berechnen, und wobei die Einstiegsreihenfolge, die aus den nicht-invasiven Echtzeitdaten erhalten wird, mit einer geplanten Einstiegsreihenfolge verglichen wird, um die personalisierte Echtzeit-Einstiegszeit zu schätzen;

und

Erzeugen, über den einen oder die mehreren Hardwareprozessoren, eines oder mehrerer Alarme basierend auf der geschätzten personalisierten Echtzeit-Einstiegszeit, wobei der eine oder die mehreren Alarme in einem vordefinierten Zeitintervall zum Anschließen an eine Warteschlange einer vordefinierten Länge erzeugt werden, und wobei der eine oder die mehreren Alarme über die Eingabe-/Ausgabeschnittstelle an den einen oder die mehreren Passagiere übermittelt werden.

**Revendications**

1. Procédé mis en œuvre par processeur (400) comprenant :

la réception (402), via une interface d'entrée/-sortie, de données de planification de vol, d'une ou de plusieurs données de configuration de vol prédéfinies, d'un ou de plusieurs détails de passager, d'une ou de plusieurs données de temps d'embarquement historiques, d'une ou de plusieurs données invasives en temps réel, d'une ou de plusieurs données non invasives en temps réel et d'une ou de plusieurs politiques et données de référence des compagnies aériennes, dans lequel les données invasives en temps réel incluent des données de capteur de détection et de télémétrie par la lumière (LIDAR), et dans lequel les données non invasives en temps réel incluent un scan de carte d'embarquement, et un ordre d'embarquement ;

l'estimation (404), via un ou plusieurs processeurs matériels (112), d'un taux de service d'embarquement pour au moins un passager sur la base des une ou plusieurs données de temps d'embarquement historiques reçues de l'ensemble passagers pour un vol similaire précédent et du temps requis pour l'embarquement de tous les passagers du vol ;

le classement (406), via un ou plusieurs processeurs matériels, de chacun des un ou plusieurs passagers sur la base des un ou plusieurs détails de passager reçus incluant un siège attribué, l'âge des un ou plusieurs passagers, des une ou plusieurs données d'embarquement historiques reçues d'un vol similaire et de la configuration prédéfinie reçue d'un aéronef ;

l'estimation (408), via les un ou plusieurs processeurs matériels, d'un temps d'embarquement personnalisé en temps réel sur la base du classement de chacun des un ou plusieurs passagers et du taux de service d'embarquement estimé en utilisant un modèle de régression linéaire prédéfini, dans lequel le modèle de régression utilise des coefficients estimés à partir des données d'embarquement historiques en utilisant une méthode des moindres carrés ordinaires (OLS), dans lequel un plan 3D en temps réel de porte d'embarquement généré par les données de capteur LIDAR est utilisée comme entrée pour calculer le temps d'embarquement personnalisé, et dans lequel l'ordre d'embarquement obtenu à partir des données non invasives en temps réel est comparé à un ordre d'embarquement planifié pour estimer le temps d'embarquement personnalisé en temps réel ; et

la génération (410), via les un ou plusieurs processeurs matériels, d'une ou de plusieurs alertes sur la base du temps d'embarquement personnalisé en temps réel estimé, dans lequel les une ou plusieurs alertes sont générées à un intervalle de temps prédéfini pour rejoindre une file d'attente d'une longueur prédéfinie, et dans lequel les une ou plusieurs alertes sont transmises aux un ou plusieurs passagers via l'interface d'entrée/sortie.

2. Procédé mis en œuvre par processeur (400) selon la revendication 1, comprenant en outre :
la réestimation, via les un ou plusieurs processeurs matériels, d'un temps d'embarquement personnalisé pour un ou plusieurs passagers défaillants et un ou plusieurs passagers absents pour rejoindre la file d'attente.

3. Procédé mis en œuvre par processeur (400) selon la revendication 1, dans lequel la file d'attente comprend une file d'attente active et une file d'attente en veille.

4. Procédé mis en œuvre par processeur (400) selon la revendication 1, dans lequel la file d'attente active est une file d'attente physique d'une longueur prédéfinie et la file d'attente en veille est une file d'attente virtuelle.

5. Procédé mis en œuvre par processeur (400) selon la revendication 1, dans lequel les politiques prédéfinies de compagnie aérienne incluent une organisation d'embarquement, une disposition pour un ou plusieurs passagers défaillants et des préférences pour embarquer un ou plusieurs passagers sur la base d'un niveau de fidélité, et une classe tarifaire.

6. Procédé mis en œuvre par processeur (400) selon la revendication 1, dans lequel des données de planification de vol incluent un temps d'arrivée estimé (ETA) et un temps de départ estimé (ETD) conjointement avec des informations d'origine et de destination du vol.

7. Système (100) comprenant :

une interface d'entrée/sortie (104) pour recevoir des données de planification de vol, une ou plusieurs données de configuration de vol prédéfinies, un ou plusieurs détails de passager, une ou plusieurs données de temps d'embarquement historiques, une ou plusieurs données invasives en temps réel, une ou plusieurs données non invasives en temps réel et une ou plusieurs politiques et données de référence des compagnies aériennes, dans lequel les données invasives en temps réel incluent des données de capteur de détection et de télémétrie par la lumière (LIDAR), et dans lequel les données non invasives en temps réel incluent un scan de carte d'embarquement, et un ordre d'embarquement ;
un ou plusieurs processeurs matériels (112) ;
au moins une mémoire (110) en communication avec les un ou plusieurs processeurs matériels, dans lequel les un ou plusieurs processeurs matériels sont configurés pour exécuter des instructions programmées stockées dans l'au moins une mémoire (110), pour :

estimer un taux de service d'embarquement pour au moins un passager sur la base des une ou plusieurs données de temps d'embarquement historiques de l'ensemble des passagers pour un vol similaire précédent et du temps requis pour l'embarquement de tous les passagers du vol ;
classer chacun des un ou plusieurs passagers sur la base des un ou plusieurs détails de passager reçus incluant un siège attribué, l'âge des un ou plusieurs passagers, des une ou plusieurs données d'embarquement historiques reçues d'un vol similaire et de la configuration prédéfinie reçue d'un aéronef ;
estimer un temps d'embarquement personnalisé en temps réel sur la base du classement de chacun des un ou plusieurs passagers et du taux de service d'embarquement estimé en utilisant un modèle de régression linéaire prédéfini, dans lequel le modèle de régression utilise des coefficients estimés à partir des données d'embarquement historiques en utilisant une méthode des moindres carrés ordinaires (OLS), dans lequel un plan 3D en temps réel de porte d'embarquement générée par les données de capteur LIDAR est utilisée comme entrée pour calculer le temps d'embarquement personnalisé, et dans lequel l'ordre d'embarquement obtenu à partir des données non invasives en temps réel est comparé à un ordre d'embarquement planifié pour estimer le temps d'embarquement personnalisé en temps réel ; et générer une ou plusieurs alertes sur la base du temps d'embarquement personnalisé en temps réel estimé, dans lequel les une ou plusieurs alertes sont générées à un intervalle de temps prédéfini pour rejoindre une file d'attente d'une longueur prédéfinie, et dans lequel les une ou plusieurs alertes sont transmises aux un ou plusieurs passagers via l'interface d'entrée/sortie.

**8.** Support lisible par ordinateur non transitoire stockant une ou plusieurs instructions qui, lorsqu'elles sont exécutées par un ou plusieurs processeurs sur un système, amènent les un ou plusieurs processeurs à effectuer le procédé comprenant :

la réception, via une interface d'entrée/sortie, de données de planification de vol, d'une ou de plusieurs données de configuration de vol prédéfinies, d'un ou de plusieurs détails de passager, d'une ou de plusieurs données de temps d'embarquement historiques, d'une ou de plusieurs données invasives en temps réel, d'une ou de plusieurs données non invasives en temps réel et d'une ou de plusieurs p politiques et données de référence des compagnies aériennes, dans lequel les données invasives en temps réel incluent des données de capteur de détection et de télémétrie par la lumière (LIDAR), et dans lequel les données non invasives en temps réel incluent un scan de carte d'embarquement, et un ordre d'embarquement ;
l'estimation, via un ou plusieurs processeurs matériels, d'un taux de service d'embarquement pour au moins un passager sur la base des une ou plusieurs données de temps d'embarquement historiques reçues de passagers totaux pour un vol similaire précédent et du temps requis pour l'embarquement de tous les passagers du vol ;
le classement, via un ou plusieurs processeurs matériels, de chacun des un ou plusieurs passagers sur la base des un ou plusieurs détails de passager reçus incluant un siège attribué, l'âge des un ou plusieurs passagers, des une ou plusieurs données d'embarquement historiques reçues d'un vol similaire et de la configuration prédéfinie reçue d'un aéronef ;
l'estimation, via les un ou plusieurs processeurs matériels, d'un temps d'embarquement personnalisé en temps réel sur la base du classement de chacun des un ou plusieurs passagers et du taux de service d'embarquement estimé en utilisant un modèle de régression linéaire prédéfini, dans lequel le modèle de régression utilise des coefficients estimés à partir des données d'embarquement historiques en utilisant une méthode des moindres carrés ordinaires (OLS), dans lequel un plan 3D en temps réel de porte d'embarquement généré par les données de capteur LIDAR est utilisée comme entrée pour calculer le temps d'embarquement personnalisé, et dans lequel l'ordre d'embarquement obtenu à partir des données non invasives en temps réel est comparé à un ordre d'embarquement planifié pour estimer le temps d'embarquement personnalisé en temps réel ; et

la génération, via les un ou plusieurs processeurs matériels, d'une ou de plusieurs alertes sur la base du temps d'embarquement personnalisé en temps réel estimé, dans lequel les une ou plusieurs alertes sont générées à un intervalle de temps prédéfini pour rejoindre une file d'attente d'une longueur prédéfinie, et dans lequel les une ou plusieurs alertes sont transmises aux un ou plusieurs passagers via l'interface d'entrée/sortie.

FIG. 1

**FIG. 2**

**Airline Data from various systems**

| Flight Schedule data | Real time Invasive Data |
| Flight Configuration data | Real time Non-Invasive Data |
| Boarding time data | boarding service rate Data |
| Passenger Data | Airline policies & rules |

**Personalized boarding time**

Receiving Inputs

Ranking Model

Estimating personalized boarding time

Remaining time Alerts/Updates

Re-estimating personalized boarding time

Optimized revised remaining time alert/updates

**System Output**

Static Predictions Time to join the queue

Dynamic Predictions Time to join the queue

Updates/Alerts to user's device

Optimized real time remaining time to join the queue

Historical boarding time data optimization

**FIG. 3**

400

Start

| Receiving information of passengers, airline and historical boarding | — 402 |

| Estimating boarding service rate based on historical boarding information | — 404 |

| Ranking passengers based on historical boarding and passenger information | — 406 |

| Estimating real-time personalized boarding time based on ranking of passengers | — 408 |

| Generating alerts based on the real-time personalized boarding time estimation | — 410 |

Stop

**FIG. 4**

**EP 4 068 171 B1**

**REFERENCES CITED IN THE DESCRIPTION**

**Patent documents cited in the description**

- IN 202121014489

- US 2019108758 A1